# EUROPÄISCHE PATENTSCHRIFT

(11) **EP 3 699 566 B1**
(45) Veröffentlichungstag und Bekanntmachung des Hinweises auf die Patenterteilung: **19.04.2023**
(21) Anmeldenummer: 20156842.5
(22) Anmeldetag: 12.02.2020
(51) Int. Cl.: G01K 7/42, G01K 5/00, H02P 29/60, G01K 3/00

(54) **VORRICHTUNG UND VERFAHREN ZUR ÜBERWACHUNG EINER TEMPERATUR EINER ELEKTRISCHEN MASCHINE**
DEVICE AND METHOD FOR MONITORING A TEMPERATURE OF AN ELECTRIC MACHINE
DISPOSITIF ET PROCÉDÉ DE SURVEILLANCE D'UNE TEMPÉRATURE D'UNE MACHINE ÉLECTRIQUE

(30) Priorität: 19.02.2019 DE 102019202235
(43) Veröffentlichungstag der Anmeldung: 26.08.2020
(73) Patentinhaber: Robert Bosch GmbH, 70442 Stuttgart (DE)
(72) Erfinder: Fischer, Arne, 74376 Gemmrigheim (DE)

(56) Entgegenhaltungen:
- EP-A1- 3 404 810
- DE-A1-102005 004 862

## Beschreibung

Die vorliegende Erfindung betrifft eine Vorrichtung sowie ein Verfahren zur Überwachung der Temperatur in einer elektrischen Maschine.

### Stand der Technik

Elektrische Maschinen finden in zahlreichen Anwendungsgebieten Einsatz. So werden beispielsweise elektrische Maschinen auch zunehmend für den Antrieb von Kraftfahrzeugen bei ganz oder teilweise elektrisch angetriebenen Fahrzeugen eingesetzt. Während des Betriebs einer elektrischen Maschine entsteht dabei Wärme. Überschreitet die Temperatur in einer elektrischen Maschine einen kritischen Grenzwert, so kann es erforderlich sein, die Leistung der elektrischen Maschine zu reduzieren, um einen weiteren Temperaturanstieg zu vermeiden. Hierzu ist es erforderlich, die Temperatur an vorgegebenen Punkten innerhalb der elektrischen Maschine möglichst genau zu kennen.

Die Druckschrift DE 10 2014 225 978 A1 offenbart eine Temperatursensor-Einheit für einen Elektromotor eines Kraftfahrzeugs. Es wird vorgeschlagen, einen Temperatursensor an einem Gehäuse des Elektromotors anzuordnen, um die Temperatur der Wicklung eines Stators des Elektromotors zu ermitteln.

Die DE 10 2005 004 862 A1 beschreibt ein Vefahren zur Überwachung der Temperatur eines Lagers einer elektrischen Maschine. Bei dem Verfahren wird ein Temperaturmodell vorgegeben, welches auf Basis eines Mehrmassenmodells die thermischen Verhältnisse in der elektrischen Maschine nachbildet.

EP 3 404 810 A1 beschreibt ein Verfahren zum Überwachen des Betriebes einer elektrischen rotierenden Maschine. Es wird vorgeschlagen, dass auf einer äußeren Oberfläche eines Maschinengehäuzses eine äußere Temperatur an einer bekannten Position erfasst wird, wobei aus der erfassten äußeren Temperatur mittels eines in einer Cloud bereitgestellten Temperaturmodells zumindest eine innere Temperatur ermittelt wird.

### Offenbarung der Erfindung

Die vorliegende Erfindung schafft eine Vorrichtung zur Überwachung einer Temperatur in einer elektrischen Maschine mit den Merkmalen des Anspruchs 1, ein elektrisches Antriebssystem mit den Merkmalen des Anspruchs 7 und ein Verfahren zur Überwachung der Temperatur in einer elektrischen Maschine mit den Merkmalen des Anspruchs 8. Weitere vorteilhafte Ausführungsformen sind Gegenstand der abhängigen Patentansprüche.

### Vorteile der Erfindung

Der vorliegenden Erfindung liegt die Erkenntnis zugrunde, dass für einen zuverlässigen Betrieb einer elektrischen Maschine, insbesondere an den Leistungsgrenzen, eine möglichst präzise Kenntnis der Temperatur in der elektrischen Maschine erforderlich ist. Der vorliegenden Erfindung liegt ferner die Erkenntnis zugrunde, dass für eine sensorische Erfassung der Temperatur in einer elektrischen Maschine ein oder mehrere Temperatursensoren erforderlich sind. Diese Temperatursensoren sollten vorzugsweise möglichst nahe an Positionen angeordnet sein, an denen eine kritische Temperatur nicht überschritten werden soll. Diese Punkte sind gegebenenfalls nicht oder nur schwer zugänglich. Daher ist es schwierig, an den relevanten Positionen die erforderlichen Temperatursensoren zu verbauen. Selbst wenn an einer solchen Position ein Temperatursensor angeordnet ist, so ist dieser in der Regel nicht oder nur sehr schwer zugänglich. Somit kann ein solcher Temperatursensor im Fehlerfall nicht oder nur unter sehr großem Aufwand ausgetauscht werden.

Es ist daher eine Idee der vorliegenden Erfindung, dieser Erkenntnis Rechnung zu tragen und eine Überwachung der Temperatur in einer elektrischen Maschine vorzusehen, welche eine Ermittlung der Temperatur an kritischen Stellen der elektrischen Maschine auch ohne sensorische Messung ermöglicht. Hierzu ist es vorgesehen, eine Temperatur an vorbestimmten Positionen der elektrischen Maschine unter Verwendung eines oder mehrerer Betriebsparameter der elektrischen Maschine zu berechnen.

Die Verwendung von Betriebsparametern der elektrischen Maschine zur Ermittlung der Temperatur in der elektrischen Maschine ermöglicht eine dynamische Modellierung des Temperaturverhaltens der elektrischen Maschine. Auf diese Weise ist es möglich, auch ohne sensorische Temperaturmessung eine sehr präzise Aussage über die Temperatur der elektrischen Maschine zu erhalten. Insbesondere kann durch die Berechnung der Temperaturentwicklung in der elektrischen Maschine eine Aussage über die Temperaturentwicklung an kritischen Stellen der elektrischen Maschine getroffen werden, an denen eine sensorische Temperaturmessung nicht möglich ist.

Durch eine präzise Modellierung des dynamischen Temperaturverhaltens einer elektrischen Maschine und die damit verbundene präzise Kenntnis der Temperaturentwicklung insbesondere an kritischen Stellen, kann die elektrische Maschine sehr nahe bis zu einer maximalen Temperaturgrenze betrieben werden. Auf diese Weise kann die Leistung der elektrischen Maschine bis in den Grenzbereich sehr gut ausgenutzt werden. Erforderliche Sicherheitszuschläge können minimiert werden. Darüber hinaus kann gewährleistet werden, dass gefährliche Betriebszustände aufgrund einer Temperaturerhöhung zuverlässig vermieden werden. Auf diese Weise kann die Lebensdauer der elektrischen Maschine weiter erhöht werden. Werden neben der Berechnung des Temperaturverhaltens der elektrischen Maschine zusätzlich sensorische Messwerte für die Temperaturentwicklung in der elektrischen Maschine bereitgestellt, so können die bereitgestellten Sensorwerte unter Verwendung der berechneten Temperaturentwicklung verifiziert werden. Auf diese Weise können gegebenenfalls Störungen oder Fehler in den sensorisch ermittelten Temperaturwerten detektiert werden.

Gemäß einer Ausführungsform ist die Verarbeitungseinrichtung dazu ausgelegt, eine Temperaturverteilung in der elektrischen Maschine unter Verwendung des empfangenen mindestens einen Betriebsparameters zu berechnen. Auf diese Weise ist die Berechnung der Temperatur in der elektrischen Maschine nicht auf einen Temperaturwert an einer einzigen Position begrenzt. Vielmehr kann der Temperaturverlauf an vorgegebenen Stellen der elektrischen Maschine oder gegebenenfalls auch innerhalb der gesamten elektrischen Maschine ermittelt werden. Dies ermöglicht eine sehr gute Kenntnis über die Temperaturentwicklung. Insbesondere können gegebenenfalls auch Temperaturgradienten bestimmt und mit in das Betriebsverhalten der elektrischen Maschine einbezogen werden.

Neben der Berechnung einer räumlichen Temperaturverteilung ist zusätzlich oder alternativ auch eine Berechnung einer zeitlichen Temperaturverteilung möglich. In diesem Fall kann beispielsweise für eine oder mehrere Positionen in der elektrischen Maschine der Verlauf der Temperatur über die Zeit berechnet werden. Hierdurch ist insbesondere eine Prognose über eine zukünftige Temperaturentwicklung in der elektrischen Maschine möglich.

Gemäß einer Ausführungsform umfasst der mindestens eine Betriebsparameter mindestens einen der folgenden Parameter: Ein elektrischer Strom der elektrischen Maschine, eine elektrische Leistung der elektrischen Maschine, ein zeitlicher Verlauf eines elektrischen Stroms der elektrischen Maschine, ein zeitlicher Verlauf einer elektrischen Leistung der elektrischen Maschine, eine Temperatur eines Kühlmediums, insbesondere eines Kühlmediums der elektrischen Maschine, ein elektrischer Widerstand einer Komponente eines elektrischen Antriebssystems mit der elektrischen Maschine oder einen beliebigen weiteren Betriebsparameter der elektrischen Maschine. Die Betriebsparameter können beispielsweise sensorisch erfasst und an der Eingangsschnittstelle bereitgestellt werden. Darüber hinaus können beispielsweise auch Sollwerte einer Steuereinrichtung für ein elektrisches Antriebssystem mit der elektrischen Maschine an der Eingangsschnittstelle bereitgestellt und für die Berechnung der Temperatur einbezogen werden.

Gemäß einer Ausführungsform ist die Verarbeitungseinrichtung dazu ausgelegt, ferner mindestens einen der folgenden Parameter mit in die Berechnung der Temperatur einzubeziehen: Eine Umgebungstemperatur der elektrischen Maschine, eine geographische Position der elektrischen Maschine, oder einen beliebigen weiteren Parameter der Umgebung der elektrischen Maschine.

Beispielsweise können auch Luftfeuchtigkeit, Luftdruck, oder auch Umgebungsparameter gegen welche die elektrische Maschine arbeiten muss, mit in die Berechnung einbezogen werden. Die Umgebungstemperatur kann beispielsweise mittels eines geeigneten Sensors erfasst werden. Die geographische Position kann beispielsweise mittels eines Satellitennavigationssystems, zum Beispiel GPS oder ähnlichem ermittelt werden. Handelt es sich bei der elektrischen Maschine beispielsweise um einen Elektromotor für ein Elektrofahrzeug, so kann beispielsweise auch die geographische Position aus dem Navigationssystem des Elektrofahrzeugs bereitgestellt werden. Darüber hinaus können auch von den Steuersystemen des Elektrofahrzeugs weitere Umgebungsparameter bereitgestellt werden. Beispielsweise kann auch berücksichtigt werden, ob das Fahrzeug eine Steigung hinauf oder hinab fährt.

Erfindungsgemäß umfasst die Vorrichtung zur Überwachung der Temperatur in der elektrischen Maschine einen Temperatursensor. Der Temperatursensor ist dazu ausgelegt, eine Temperatur an der vorbestimmten Position oder an einer Position in einer räumlichen Nähe der vorbestimmten Position zu erfassen. Die Verarbeitungseinrichtung kann in diesem Fall dazu ausgelegt sein, die Berechnung der Temperatur an der vorbestimmten Position unter Verwendung der durch den Temperatursensor erfassten Temperatur anzupassen. Beispielsweise ist es möglich, einen oder mehrere Modellparameter eines Modells zur Berechnung der Temperatur unter Verwendung der von dem Temperatursensor bereitgestellten Temperatur anzupassen. Auf diese Weise ist es möglich, die Modellierung für die Berechnung der Temperatur dynamisch unter Verwendung der Temperatur von dem Temperatursensor anzupassen. Somit kann das Temperaturmodell der elektrischen Maschine auch gegebenenfalls mögliche individuelle Fertigungstoleranzen der elektrischen Maschine kompensieren. Dies ermöglicht eine sehr präzise Modellierung des Temperaturverhaltens.

Erfindungsgemäß umfasst die Vorrichtung eine Kontrolleinrichtung. Die Kontrolleinrichtung ist dazu ausgelegt, die von dem Temperatursensor erfasste Temperatur unter Verwendung der von der Verarbeitungseinrichtung berechneten Temperatur zu verifizieren. Erfindungsgemäß vergleicht die Kontrolleinrichtung die berechnete Temperatur mit der Temperatur des Temperatursensors. Stellt die Kontrolleinrichtung dabei eine Abweichung der berechneten Temperatur und der sensorisch erfassten Temperatur fest, die einen vorgegebenen Schwellwert überschreitet, so wird ein Fehler in dem Temperatursensor detektiert.

In diesem Fall kann beispielsweise für die weitere Steuerung der elektrischen Maschine die sensorisch erfasste Temperatur verworfen werden. Insbesondere kann die Steuerung im Fehlerfall beispielsweise nur mit der berechneten Temperatur fortgesetzt werden. Auf diese Weise kann bei einer Alterung des Temperatursensors oder einem Totalausfall des Temperatursensors die elektrische Maschine unter Verwendung der berechneten Temperatur fortgesetzt werden.

Gemäß einer Ausführungsform umfasst die Vorrichtung zur Überwachung der Temperatur in der elektrischen Maschine eine Übertragungseinrichtung. Die Übertragungseinrichtung ist dazu ausgelegt, mit einer externen Speichereinrichtung gekoppelt zu werden. Insbesondere ist die Übertragungseinrichtung dazu ausgelegt, die empfangenen Betriebsparameter an die Speichereinrichtung zu übertragen. Ferner kann die Übertragungseinrichtung auch die berechnete Temperatur an der vorbestimmten Position der elektrischen Maschine übertragen. Stehen darüber hinaus Sensorwerte von einem oder mehreren Temperatursensoren in der elektrischen Maschine zur Verfügung, so können auch diese Temperaturwerte übertragen werden. Die übertragenen Parameter können beispielsweise von einer externen Vorrichtung ausgewertet werden. Die externe Vorrichtung kann beispielsweise Modellparameter für eine Modellierung des Temperaturverhaltens der elektrischen Maschine berechnen. Basierend auf diesen Modellparametern kann gegebenenfalls ein Temperaturmodell der Verarbeitungseinrichtung aktualisiert werden. Gegebenenfalls können die berechneten Modellparameter auch für die Konfiguration weiterer Verarbeitungseinrichtungen in anderen Vorrichtungen zur Überwachung einer Temperatur einer elektrischen Maschine eingesetzt werden. Gemäß einer Ausführungsform umfasst die Vorrichtung zur Überwachung der Temperatur in der elektrischen Maschine eine Empfangseinrichtung. Die Empfangseinrichtung ist dazu ausgelegt, Parameter für ein Rechenmodell zur Berechnung der Temperatur an der vorbestimmten Position zu empfangen. Die Verarbeitungseinrichtung kann in diesem Fall dazu ausgelegt sein, die Temperatur an der vorbestimmten Position unter Verwendung der empfangenen Parameter zu berechnen. Auf diese Weise ist es möglich, die Modellierung des Temperaturverhaltens der elektrischen Maschine in der Verarbeitungseinrichtung auch nachträglich zu aktualisieren bzw. dynamisch anzupassen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines Blockschaltbilds eines elektrischen Antriebssystems mit einer Vorrichtung zur Überwachung der Temperatur gemäß einer Ausführungsform;
- Figur 2:: eine schematische Darstellung eines elektrischen Antriebssystems mit einer Vorrichtung zur Überwachung der Temperatur gemäß einer weiteren, nicht von der Erfindung umfassten Ausführungsform; und
- Figur 3:: ein Ablaufdiagramm, wie es einem Verfahren gemäß einer Ausführungsform zugrunde liegt.

### Ausführungsformen der Erfindung

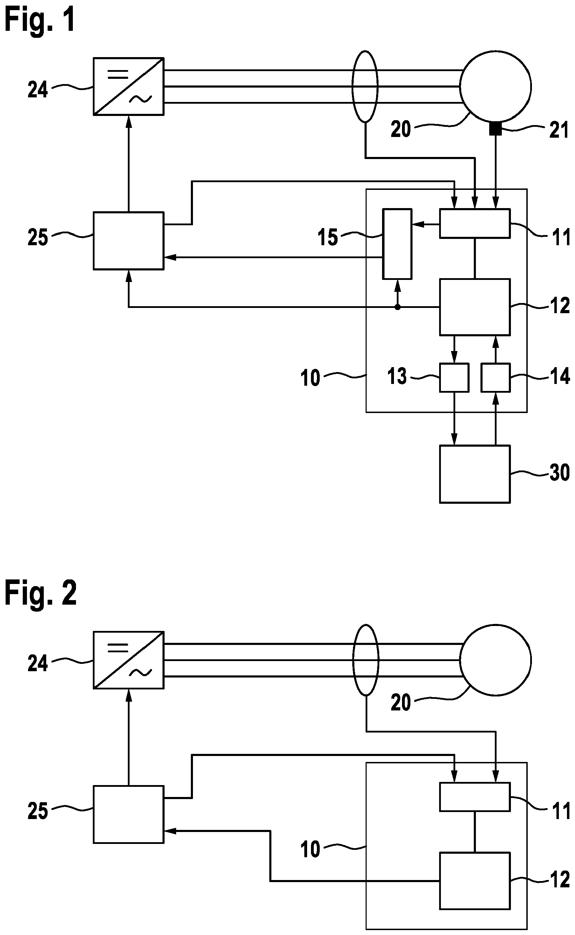

Figur 1 zeigt eine schematische Darstellung eines Blockschaltbilds eines elektrischen Antriebssystems mit einer Vorrichtung zur Überwachung einer Temperatur in einer elektrischen Maschine gemäß einer Ausführungsform. Das elektrische Antriebssystem umfasst eine elektrische Maschine 20, die beispielsweise von einem elektrischen Stromrichter 24 gespeist wird. Die dreiphasige Ansteuerung der elektrischen Maschine 20 dient dabei lediglich dem Verständnis und stellt keine Einschränkung der vorliegenden Erfindung dar. Der Wechselrichter 24 wird beispielsweise von einer Steuereinrichtung 25 angesteuert. Während des Betriebs der elektrischen Maschine 20 kann beispielsweise eine Temperatur in der elektrischen Maschine 20 mittels eines Temperatursensors 21 erfasst werden. Die von dem Temperatursensor 21 erfasste Temperatur kann an der Steuereinrichtung 25 bereitgestellt werden. Überschreitet der von dem Temperatursensor 21 bereitgestellte Temperaturwert einen vorgegebenen Grenzwert, so kann die Leistung der elektrischen Maschine 20 durch die Steuereinrichtung 25 eingeschränkt werden. Auf diese Weise kann beispielsweise eine Überhitzung der elektrischen Maschine 20 verhindert werden. Würde der Temperatursensor 21 ausfallen oder gegebenenfalls aufgrund von Alterungseffekten im Laufe der Zeit einen fehlerhaften Wert ausgeben, so wäre der sichere Betrieb der elektrischen Maschine 20 eventuell nicht weiter möglich.

Zur Überwachung des Temperaturverhaltens der elektrischen Maschine 20 ist daher eine Vorrichtung 10 zur Überwachung der Temperatur in der elektrischen Maschine 20 vorgesehen. Die Vorrichtung 10 zur Überwachung der Temperatur in der elektrischen Maschine 20 kann hierzu einen oder mehrere Betriebsparameter des elektrischen Antriebssystems auswerten und unter Verwendung dieser Betriebsparameter das Temperaturverhalten der elektrischen Maschine 20 berechnet. Beispielsweise können an einer Eingangsschnittstelle 11 der Vorrichtung 10 zur Überwachung der Temperatur der elektrischen Maschine 20 ein oder mehrere Betriebsparameter des elektrischen Antriebssystems empfangen werden. Bei den Betriebsparametern kann es sich beispielsweise um Messwerte des elektrischen Antriebssystems handeln. Darüber hinaus können gegebenenfalls auch Sollwertvorgaben oder Steuergrößen an der Eingangsschnittstelle 11 bereitgestellt werden. Beispielsweise kann die Steuereinrichtung 25 Sollwerte oder Steuergrößen bereitstellen. Ferner können beispielsweise die elektrischen Ströme von dem Stromrichter 24 zur elektrischen Maschine 20 sensorisch erfasst und an der Eingangsschnittstelle 11 bereitgestellt werden. Darüber hinaus können auch Spannungen und/oder Leistungen gemessen und bereitgestellt werden. Auch ein oder mehrere Sensorwerte von einem oder mehreren Temperatursensoren 21 in der elektrischen Maschine 20 können an der Vorrichtung 10 zur Überwachung der Temperatur bereitgestellt werden. Darüber hinaus können gegebenenfalls auch noch weitere Umgebungsparameter, wie beispielsweise die Umgebungstemperatur, eine geographische Position, Informationen über eine zu erwartende Belastung der elektrischen Maschine 20 oder beliebige weitere externe Informationen an der Vorrichtung 10 zur Überwachung der Temperatur bereitgestellt werden.

Beispielsweise kann es sich bei der elektrischen Maschine 20 um eine elektrische Maschine 20 um eine elektrische Maschine eines Antriebssystems für ein Elektrofahrzeug handeln. Insbesondere kann die elektrische Maschine 20 eine Komponente einer hochintegrierten Achse für ein elektrisches Antriebssystem eines Fahrzeugs sein, die beispielsweise auch unter dem Begriff "eAchse" bekannt ist. Handelt es sich bei der elektrischen Maschine 20 um eine elektrische Maschine für ein Elektrofahrzeug, so können gegebenenfalls auch externe Informationen von einem Steuersystem des Fahrzeugs an der Vorrichtung 10 zur Überwachung der Temperatur bereitgestellt werden. Beispielsweise kann von einem Navigationssystem die Position von Informationen über die Fahrtroute, insbesondere über Steigungen und Gefälle, etc. bereitgestellt werden. Selbstverständlich sind auch beliebige andere Informationen möglich.

Die bereitgestellten Informationen werden von einer Verarbeitungseinrichtung 12 ausgewertet. Die Verarbeitungseinrichtung 12 kann beispielsweise ein thermisches Modell der elektrischen Maschine 20 berechnen. Insbesondere ist es möglich, ein dynamisches Temperaturverhalten der elektrischen Maschine 20 zu berechnen. Hierzu kann beispielsweise ein Modell der elektrischen Maschine 20 mit einem oder mehreren Modellparametern verwendet werden. Das Modell, insbesondere die Modellparameter, können beispielsweise fest in einem Speicher der Verarbeitungseinrichtung 12 abgespeichert sein. Darüber hinaus ist es auch möglich, die Modellparameter dynamisch anzupassen. Beispielsweise kann die Verarbeitungseinrichtung 12 die Modellierung des Temperaturverhaltens der elektrischen Maschine 20 unter Verwendung der Sensorwerte des Temperatursensors 21 in der elektrischen Maschine 20 anpassen. Auf diese Weise ist es beispielsweise möglich, das Temperaturmodell dynamisch anzupassen. Somit können beispielsweise auch mögliche Fertigungstoleranzen einzelner elektrischer Maschinen 20 berücksichtigt und kompensiert werden.

Es ist auch möglich, die in der Verarbeitungseinrichtung 12 zur Verfügung stehenden Informationen, insbesondere die Betriebsparameter der elektrischen Maschine 20, gegebenenfalls weitere Umgebungsparameter, Sensorwerte des Temperatursensors 21 sowie die berechnete Temperatur bzw. der Temperaturverlauf der elektrischen Maschine 20 über eine Übertragungseinrichtung 13 an eine externe Vorrichtung 30 zu übertragen. Bei der externen Vorrichtung 30 kann es sich beispielsweise um einen Server, insbesondere einen Server in einer Cloud oder ähnlichem handeln. Die externe Vorrichtung 30 kann die über die Übertragungseinrichtung 13 bereitgestellten Informationen empfangen und speichern. Ferner kann die externe Verarbeitungseinrichtung 30 die empfangenen Informationen auswerten und beispielsweise weitere Modellparameter für eine Modellierung der elektrischen Maschine 20 berechnen.

Die von der externen Vorrichtung 30 berechneten Modellparameter können beispielsweise über eine Empfangseinrichtung 14 der Vorrichtung 10 zur Überwachung der Temperatur in der elektrischen Maschine 20 zurückgespielt werden. Auf diese Weise kann die Modellierung des Temperaturverhaltens durch die Vorrichtung 10 zur Überwachung der Temperatur in der elektrischen Maschine 20 angepasst werden. Die Übertragung der Daten zwischen der Vorrichtung 10 zur Überwachung der Temperatur und der externen Vorrichtung 30 kann beispielsweise mittels einer kabellosen Kommunikationsverbindung, beispielsweise einer Mobilfunkverbindung, wie zum Beispiel GSM, UMTS, LTE, 5G oder auch Bluetooth oder ähnliches, erfolgen. Darüber hinaus ist selbstverständlich auch eine kabelgebundene Verbindung möglich. Insbesondere ist es beispielsweise auch möglich, einen nicht flüchtigen Speicher, wie zum Beispiel einen USB-Stick oder eine Secure Data Karte (SD-Card), mit der Vorrichtung 10 zur Überwachung der Temperatur zu koppeln und auf diese Weise einen Datenaustausch durchzuführen. Selbstverständlich sind auch beliebige andere Verfahren zum Datenaustausch, insbesondere zur Übertragung der Betriebsparameter oder auch zum Empfangen von neuen Modellparametern für die Modellierung des Temperaturverhaltens der elektrischen Maschine 20 möglich.

Weiterhin kann eine Kontrolleinrichtung 15 vorgesehen sein, welche die Sensorwerte des Temperatursensors 21 in der elektrischen Maschine 20 mit der durch die Vorrichtung 10 zur Überwachung der Temperatur berechneten Temperatur vergleicht. Beispielsweise kann bei einer Abweichung der sensorisch erfassten Temperatur und der berechneten Temperatur um mehr als einen Schwellwert auf eine Fehlfunktion, insbesondere eine Fehlfunktion des Temperatursensors 21, geschlossen werden. In diesem Fall können beispielsweise die von dem Temperatursensor 21 bereitgestellten Sensorwerte im Weiteren verworfen werden, so dass die Steuerung, insbesondere die Begrenzung der Leistung, nur auf Basis der durch die Verarbeitungseinrichtung 12 bereitgestellten berechneten Temperatur erfolgt.

Figur 2 zeigt eine schematische Darstellung eines Blockschaubilds eines elektrischen Antriebssystems mit einer Vorrichtung 10 zur Überwachung der Temperatur in einer elektrischen Maschine 20 gemäß einer weiteren Ausführungsform. Hierbei gelten, soweit möglich, sämtliche im Zusammenhang mit Figur 1 gemachten Ausführungen. Das elektrische Antriebssystem gemäß Figur 2 unterscheidet sich von dem elektrischen Antriebssystem gemäß Figur 1 insbesondere dadurch, dass in der elektrischen Maschine 20 kein Temperatursensor 21 vorgesehen ist. Die Berechnung der Temperatur und des dynamischen Temperaturverhaltens der elektrischen Maschine 20 erfolgt auf Grundlage von sensorisch erfassten Messwerten und/oder weiteren Betriebsparametern wie Steuergrößen sowie Sollwerten. Somit kann auf Temperatursensoren 21 in oder an der elektrischen Maschine 20 verzichtet werden. Die Modellierung des Temperaturverhaltens der elektrischen Maschine 20 kann dabei beispielsweise auf Grundlagen eines Temperaturmodells erfolgen. Das Temperaturmodell kann beispielsweise auf Grundlage von zuvor sensorisch erfassten Temperaturwerten in einer elektrischen Maschine 20 erstellt werden. Hierzu kann beispielsweise eine Konfiguration gemäß Figur 1 herangezogen werden, bei der Betriebsparameter des elektrischen Antriebssystems zusammen mit sensorisch erfassten Temperaturwerten eines Temperatursensors 21 ausgewertet werden. Steht eine ausreichend präzise Modellierung des Temperaturverhaltens einer elektrischen Maschine 20 zur Verfügung, so kann, wie in Figur 2 dargestellt, die Ansteuerung und insbesondere die Leistungsbegrenzung der elektrischen Maschine 20 ausschließlich auf berechneten Temperaturwerten erfolgen.

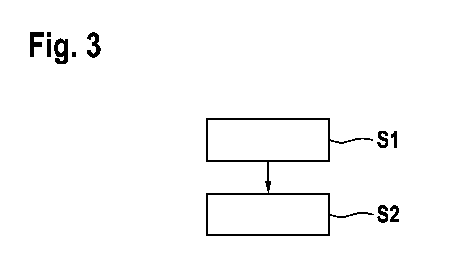

Figur 3 zeigt eine schematische Darstellung eines Ablaufdiagramms, wie es einem Verfahren zur Überwachung der Temperatur in einer elektrischen Maschine 20 zugrunde liegt. In Schritt S1 wird mindestens ein Betriebsparameter der elektrischen Maschine 20 erfasst. In Schritt S2 wird eine Temperatur an einer vorbestimmten Position der elektrischen Maschine berechnet. Die Berechnung der Temperatur erfolgt insbesondere unter Verwendung des erfassten mindestens einen Betriebsparameters. Darüber hinaus gelten für das Verfahren zur Überwachung der Temperatur sämtliche Ausführungen, wie sie zuvor im Zusammenhang mit der Vorrichtung zur Überwachung der Temperatur in der elektrischen Maschine 20 gemacht worden sind.

Zusammenfassend betrifft die vorliegende Erfindung die Überwachung der Temperatur in einer elektrischen Maschine. Hierzu werden ein oder mehrere Betriebsparameter eines elektrischen Antriebssystems erfasst. Auf Grundlage der erfassten Betriebsparameter wird daraufhin das Temperaturverhalten einer elektrischen Maschine berechnet. Hierdurch ist es möglich, die Temperatur an vorgegebenen Punkten innerhalb der elektrischen Maschine zu berechnen, ohne hierzu eine sensorische Temperaturmessung durchzuführen. Auf diese Weise kann ein Überhitzen der elektrischen Maschine zuverlässig verhindert werden.

## Patentansprüche

1. Vorrichtung (10) zur Überwachung einer Temperatur in einer elektrischen Maschine (20), mit:
einer Eingangsschnittstelle (11), die dazu ausgelegt ist, mindestens einen Betriebsparameter der elektrischen Maschine (20) zu empfangen;
einer Verarbeitungseinrichtung (12), die dazu ausgelegt ist, eine Temperatur an einer vorbestimmten Position in der elektrischen Maschine (20) unter Verwendung des empfangenen mindestens einen Betriebsparameters zu berechnen; und
einem Temperatursensor (21), der dazu ausgelegt ist, eine Temperatur an der vorbestimmten Position oder an einer Position in einer räumlichen Nähe der vorbestimmten Position zu erfassen;
wobei die Verarbeitungseinrichtung (12) dazu ausgelegt ist, die Berechnung der Temperatur an der vorbestimmten Position unter Verwendung der durch den Temperatursensor (21) erfassten Temperatur zu bestimmen;
wobei die Vorrichtung (10) ferner eine Kontrolleinrichtung (15) aufweist, die dazu ausgelegt ist, die von dem Temperatursensor (21) erfasste Temperatur mit der von der Verarbeitungseinrichtung (12) berechneten Temperatur zu vergleichen,
**dadurch gekennzeichnet, dass**
die Kontrolleinrichtung (15) dazu ausgelegt ist, einen Fehler in dem Temperatursensor (21) zu detektieren, wenn eine Abweichung der berechneten Temperatur von der sensorisch erfassten Temperatur festgestellt wird, die einen vorgegebenen Schwellwert überschreitet.

2. Vorrichtung (10) nach Anspruch 1, wobei die Verarbeitungseinrichtung (12) dazu ausgelegt ist, eine räumliche und/oder zeitliche Temperaturverteilung in der elektrischen Maschine (20) unter Verwendung des empfangenen mindestens einen Betriebsparameter zu berechnen.

3. Vorrichtung nach Anspruch 1 oder 2, wobei der empfangene mindestens eine Betriebsparameter einen elektrischen Strom der elektrischen Maschine (20), eine elektrische Leistung der elektrischen Maschine (20), einen zeitlichen Verlauf eines elektrischen Stroms elektrischen Maschine (20), einen zeitlichen Verlauf einer elektrischen Leistung der elektrischen Maschine (20), eine Temperatur eines Kühlmediums und/oder einen elektrischen Widerstand einer Komponente eines elektrischen Antriebssystems mit der elektrischen Maschine (20) umfasst.

4. Vorrichtung nach einem der Ansprüche 1 bis 3, wobei die Verarbeitungseinrichtung (12) dazu ausgelegt ist, die Temperatur an der vorbestimmten Position der elektrischen Maschine (20) unter Verwendung einer Umgebungstemperatur, einer geographischen Position der elektrischen Maschine (20) und/oder eines weiteren Umgebungsparameters zu berechnen.

5. Vorrichtung nach einem der Ansprüche 1 bis 4, mit einer Übertragungseinrichtung (13), die dazu ausgelegt ist, mit einer externen Vorrichtung (30) gekoppelt zu werden,
wobei die Übertragungseinrichtung ferner dazu ausgelegt ist, die empfangenen Betriebsparameter an die Speichereinrichtung zu übertragen.

6. Vorrichtung nach einem der Ansprüche 1 bis 5, mit einer Empfangseinrichtung (14), die dazu ausgelegt ist, Parameter für ein Rechenmodell zur Berechnung der Temperatur an der vorbestimmten Position zu empfangen,
wobei die Verarbeitungseinrichtung (12) dazu ausgelegt ist, die Temperatur an der vorbestimmten Position unter Verwendung der empfangenen Parameter zu berechnen.

7. Elektrisches Antriebssystem mit:
einer elektrischen Maschine (20);
einer Vorrichtung (10) zur Überwachung der Temperatur in der elektrischen Maschine (20) nach einem der Ansprüche 1 bis 6, und
einer Steuereinrichtung (25), die dazu ausgelegt ist, die elektrische Maschine (20) unter Verwendung der durch die Vorrichtung zur Überwachung der Temperatur berechneten Temperatur anzusteuern.

8. Verfahren zur Überwachung einer Temperatur in einer elektrischen Maschine (20), mit den Schritten:
Erfassen (S1) mindestens eines Betriebsparameters der elektrischen Maschine (20) sowie Erfassen einer Temperatur an einer vorbestimmten Position in der elektrischen Maschine (20) oder an einer Position in einer räumlichen Nähe der vorbestimmten Position mittels eines Temperatursensors;
Berechnen (S2) einer Temperatur an der vorbestimmten Position in der elektrischen Maschine (20) unter Verwendung des erfassten mindestens einen Betriebsparameters sowie unter Verwendung der durch den Temperatursensor (21) erfassten Temperatur; und
Vergleichen der von dem Temperatursensor (21) erfassten Temperatur mittels einer Kontrolleinrichtung (15) mit der von der Verarbeitungseinrichtung (12) berechneten Temperatur,
**dadurch gekennzeichnet, dass**
die Kontrolleinrichtung (15) dazu ausgelegt ist, einen Fehler in dem Temperatursensor (21) zu detektieren, wenn eine Abweichung der berechneten Temperatur von der sensorisch erfassten Temperatur festgestellt wird, die einen vorgegebenen Schwellwert überschreitet.

## Claims

1. Apparatus (10) for monitoring a temperature in an electric machine (20), comprising:
an input interface (11) that is designed to receive at least one operating parameter of the electric machine (20) ;
a processing device (12) that is designed to calculate a temperature at a predetermined position in the electric machine (20) using the at least one operating parameter received; and
a temperature sensor (21) that is designed to capture a temperature at the predetermined position or at a position in the spatial proximity of the predetermined position;
wherein the processing device (12) is designed to determine the calculation of the temperature at the predetermined position using the temperature captured by the temperature sensor (21);
wherein the apparatus (10) also has a checking device (15) that is designed to compare the temperature captured by the temperature sensor (21) with the temperature calculated by the processing device (12),
**characterized in that**
the checking device (15) is designed to detect a fault in the temperature sensor (21) if a deviation of the calculated temperature from the temperature captured using a sensor is identified that exceeds a predefined threshold value.

2. Apparatus (10) according to Claim 1, wherein the processing device (12) is designed to calculate a spatial and/or temporal temperature distribution in the electric machine (20) using the at least one operating parameter received.

3. Apparatus according to Claim 1 or 2, wherein the at least one operating parameter received comprises an electric current of the electric machine (20), an electrical power of the electric machine (20), a temporal profile of an electric current of the electric machine (20), a temporal profile of an electrical power of the electric machine (20), a temperature of a cooling medium and/or an electrical resistance of a component of an electric drive system comprising the electric machine (20) .

4. Apparatus according to one of Claims 1 to 3, wherein the processing device (12) is designed to calculate the temperature at the predetermined position of the electric machine (20) using an ambient temperature, a geographical position of the electric machine (20) and/or a further ambient parameter.

5. Apparatus according to one of Claims 1 to 4, comprising a transmission device (13) that is designed to be coupled to an external apparatus (30),
wherein the transmission device is also designed to transmit the received operating parameters to the storage device.

6. Apparatus according to one of Claims 1 to 5, comprising a reception device (14) that is designed to receive parameters for a computing model for calculating the temperature at the predetermined position,
wherein the processing device (12) is designed to calculate the temperature at the predetermined position using the received parameters.

7. Electric drive system, comprising:
an electric machine (20);
an apparatus (10) for monitoring the temperature in the electric machine (20) according to one of Claims 1 to 6, and
a control device (25) that is designed to actuate the electric machine (20) using the temperature calculated by the apparatus for monitoring the temperature.

8. Method for monitoring a temperature in an electric machine (20), comprising the steps:
capturing (S1) at least one operating parameter of the electric machine (20) and capturing a temperature at a predetermined position in the electric machine (20) or at a position in the spatial proximity of the predetermined position by means of a temperature sensor;
calculating (S2) a temperature at the predetermined position in the electric machine (20) using the at least one operating parameter captured and using the temperature captured by the temperature sensor (21); and
comparing the temperature captured by the temperature sensor (21) by means of a checking device (15) with the temperature calculated by the processing device (12), **characterized in that** the checking device (15) is designed to detect a fault in the temperature sensor (21) if a deviation of the calculated temperature from the temperature captured using a sensor is identified that exceeds a predefined threshold value.

## Revendications

1. Dispositif (10) permettant de surveiller une température dans une machine électrique (20), comprenant :
une interface d'entrée (11) qui est conçue pour recevoir au moins un paramètre de fonctionnement de la machine électrique (20) ;
un équipement de traitement (12) qui est conçu pour calculer une température à une position prédéterminée dans la machine électrique (20) en utilisant ledit au moins un paramètre de fonctionnement reçu ; et
un capteur de température (21) qui est conçu pour détecter une température à la position prédéterminée ou à une position à proximité spatiale de la position prédéterminée ;
dans lequel l'équipement de traitement (12) est conçu pour déterminer le calcul de la température à la position prédéterminée en utilisant la température détectée par le capteur de température (21) ;
dans lequel le dispositif (10) présente en outre un équipement de contrôle (15) qui est conçu pour comparer la température détectée par le capteur de température (21) avec la température calculée par l'équipement de traitement (12),
**caractérisé en ce que** l'équipement de contrôle (15) est conçu pour détecter une erreur dans le capteur de température (21) si un écart de la température calculée par rapport à la température détectée par capteur est constaté qui dépasse une valeur seuil prédéfinie.

2. Dispositif (10) selon la revendication 1, dans lequel l'équipement de traitement (12) est conçu pour calculer une distribution de température spatiale et/ou temporelle dans la machine électrique (20) en utilisant ledit au moins un paramètre de fonctionnement reçu.

3. Dispositif selon la revendication 1 ou 2, dans lequel ledit au moins un paramètre de fonctionnement reçu comprend un courant électrique de la machine électrique (20), une puissance électrique de la machine électrique (20), une courbe dans le temps d'un courant électrique de la machine électrique (20), une courbe dans le temps d'une puissance électrique de la machine électrique (20), une température d'un liquide de refroidissement et/ou une résistance électrique d'un composant d'un système d'entraînement électrique avec la machine électrique (20).

4. Dispositif selon l'une quelconque des revendications 1 à 3, dans lequel l'équipement de traitement (12) est conçu pour calculer la température à la position prédéterminée de la machine électrique (20) en utilisant une température ambiante, une position géographique de la machine électrique (20) et/ou un autre paramètre d'environnement.

5. Dispositif selon l'une quelconque des revendications 1 à 4, comprenant un équipement de transmission (13) qui est conçu pour être couplé à un dispositif externe (30),
dans lequel l'équipement de transmission est en outre conçu pour transmettre le paramètre de fonctionnement reçu à l'équipement de stockage.

6. Dispositif selon l'une quelconque des revendications 1 à 5, comprenant un équipement de réception (14) qui est conçu pour recevoir des paramètres pour un modèle de calcul permettant de calculer la température à la position prédéterminée,
dans lequel l'équipement de traitement (12) est conçu pour calculer la température à la position prédéterminée en utilisant les paramètres reçus.

7. Système d'entraînement électrique, comprenant :
une machine électrique (20) ;
un dispositif (10) de surveillance de la température dans la machine électrique (20) selon l'une quelconque des revendications 1 à 6, et
un équipement de commande (25) qui est conçu pour piloter la machine électrique (20) en utilisant la température calculée par le dispositif de surveillance de la température.

8. Procédé de surveillance d'une température dans une machine électrique (20), comprenant les étapes consistant à :
détecter (S1) au moins un paramètre de fonctionnement de la machine électrique (20) ainsi que détecter une température à une position prédéterminée dans la machine électrique (20) ou à une position à proximité spatiale de la position prédéterminée au moyen d'un capteur de température ;
calculer (S2) une température à la position prédéterminée dans la machine électrique (20) en utilisant ledit au moins un paramètre de fonctionnement détecté ainsi qu'en utilisant la température détectée par le capteur de température (21) ; et
comparer la température détectée par le capteur de température (21) au moyen d'un équipement de contrôle (15) avec la température calculée par l'équipement de traitement (12),
**caractérisé en ce que** l'équipement de contrôle (15) est conçu pour détecter une erreur dans le capteur de température (21) si un écart de la température calculée par rapport à la température détectée par capteur est constaté qui dépasse une valeur seuil prédéfinie.
